# EUROPÄISCHE PATENTANMELDUNG

(11) **EP 1 361 139 A1**
(43) Veröffentlichungstag der Anmeldung: **12.11.2003**
(21) Anmeldenummer: 03006212.9
(22) Anmeldetag: 20.03.2003
(51) Int. Cl.: B62D 1/28, B60Q 1/48, B62D 15/02, G01S 13/93

(54) **Verfahren zum Betreiben eines Parkhilfesystems und Parkhilfesystem**

(30) Priorität: 08.05.2002 DE 10220427
(71) Anmelder: Valeo Schalter und Sensoren GmbH, 74321 Bietigheim-Bissingen (DE)
(72) Erfinder: Hofmann, Georg, 74382 Neckarwestheim (DE)
(74) Vertreter: Dreiss, Fuhlendorf, Steimle & Becker

(57) **Zusammenfassung**

Die Erfindung betrifft ein Verfahren zum Betreiben eines Ein-und/oder Ausparkhilfesystems für ein Fahrzeug, ein Computerprogramm zur Durchführung des Verfahrens, ein Steuergerät zum Ausführen des Computerprogramms sowie ein Ein-und/oder Ausparkhilfesystem, wobei das erfindungsgemäße Verfahren folgende Schritte aufweist:
a) Bestimmen der Länge und/oder Breite einer Parklücke,
b) Bestimmen von wenigstens einem denkbaren Ein- und/oder Ausparkablauf für das Fahrzeug in die Parklücke bzw. aus der Parklücke, und
c) Darstellen eines vorteilhaften Ein- und/oder Ausparkablaufs derart, dass der Fahrzeuglenker den Parkablauf auf einem Anzeigegerät visuell verfolgen kann.

## Beschreibung

Die Erfindung betrifft ein Verfahren zum Betreiben eines Einund/oder Ausparkhilfesystems sowie ein Ein- und/oder Ausparkhilfesystem für ein Fahrzeug.

Derartige Systeme sind beispielsweise aus der DE 297 18 862 U1 bekannt geworden. Der Einsatz solcher Systeme hat gezeigt, dass sich der Parkvorgang trotz Anweisung an den Fahrzeuglenker als schwierig herausstellt. Insbesondere gleichzeitiges Betätigen des Lenkrades und Beschleunigen bzw. Abbremsen des Fahrzeuges auf Anweisung ist nicht unproblematisch.

Der vorliegenden Erfindung liegt deshalb die Aufgabe zugrunde, eine Verfahren zum Betreiben eines Ein- und/oder Ausparkhilfesystems sowie ein Ein- und/oder Ausparkhilfesystem bereitzustellen, das ein besseres, einfacheres, sichereres und übersichtlicheres Ein- bzw. Ausparken ermöglicht.

Diese Aufgabe wird durch ein Verfahren gelöst, das folgende Schritte aufweist:
a) Bestimmen der Länge und/oder Breite einer Parklücke,
b) Bestimmen von wenigstens einem denkbaren Ein- und/oder Ausparkablauf für das Fahrzeug in die Parklücke bzw. aus der Parklücke, und
c) Darstellen eines vorteilhaften Ein- und/oder Ausparkablaufs derart, dass der Fahrzeuglenker den Parkablauf auf einem Anzeigegerät visuell verfolgen kann.

Das beschriebene Verfahren hat den Vorteil, dass dem Fahrzeuglenker in übersichtlicher Art und Weise visuell mitgeteilt wird, wie ein vorteilhafter Ein- und/oder Ausparkablauf verlaufen kann. Eine derartige Darstellung ist wesentlich übersichtlicher und leichter nachvollziehbar als beispielsweise akustische Warntöne oder das Aufleuchten von optischen Warnsignalen an geeigneten Stellen des Fahrzeuges. Das Bestimmen der Länge und/oder Breite der Parklücke kann beispielsweise beim langsamen Vorbeifahren an der Parklücke erfolgen. Ist das Fahrzeug bereits geparkt, kann die Länge und/oder Breite der Parklücke beim stehenden Fahrzeug in der Parklücke erfasst werden. Durch das visuelle Darstellen des Parkablaufs kann der Fahrzeuglenker den Parkablauf in übersichtlicher Weise nachvollziehen. Je nach Ort des Anzeigegeräts kann ein Einparken derart erfolgen, dass der Fahrzeuglenker sich nicht zur Parklücke hin wenden oder umdrehen muss, sondern lediglich das Anzeigegerät betrachtet. Der Einparkvorgang wird für den Fahrzeuglenker übersichtlicher und wesentlich vereinfacht.

Ein vorteilhaftes Verfahren ergibt sich·dann, wenn das Fahrzeug und die das Fahrzeug umgebenden Objekte schematisch bildlich dargestellt werden. Die schematische Darstellung hat den Vorteil, dass lediglich wesentliche Dinge auf dem Anzeigegerät dargestellt werden und der Fahrzeuglenker nicht von unnötigen Darstellungen abgelenkt wird.

Besonders vorteilhaft ist, wenn der Fahrzeuglenker den Parkablauf zeitgleich zur tatsächlichen Bewegung des Fahrzeuges und/oder als Vorschau, insbesondere bei stehendem Fahrzeug, verfolgen kann. Das zeitgleiche Verfolgen des Parkablaufs hat den Vorteil, dass der Fahrzeuglenker zu jeder Zeit Kenntnis davon hat, in welcher Position er sich relativ zur Parklücke bzw. zu den die Parklücke umgebenden Objekten befindet. Durch die Vorschau des Parkablaufes wird dem Fahrzeuglenker ein Gefühl dafür vermittelt, wie der Parkablauf vorgesehen ist. Der Fahrzeuglenker erhält beispielsweise Kenntnis davon, wie oft er in welche Richtung vor- bzw. rückstoßen muss. Der Fahrzeuglenker kann sich folglich auf den Einparkvorgang einstellen.

Besonders vorteilhaft ist, wenn die Darstellung eine Ansicht aus der Vogelperspektive ist. Diese Ansicht gibt ein klares Bild von den die Parklücke begrenzenden Objekten und des Bewegungsablaufes des Fahrzeuges während des Einparkens.

Die Darstellung des Parkvorganges wird vorteilhafterweise als bewegte, dynamische Darstellung erfolgen. Gerade eine derartige bewegte, dynamische Darstellung gibt den Parkablauf anschaulich wieder und ist für den Fahrzeuglenker einprägsam.

Um den vorteilhaften Ein- und/oder Ausparkablauf durchzuführen, kann erfindungsgemäß vorgesehen sein, dass der Fahrzeuglenker vor und/oder während des Parkablaufs angewiesen wird, in welche Richtung das Fahrzeug zu bewegen ist und in welche Richtung bzw. wie weit das Lenkrad einzuschlagen ist. Ein Anweisen vor dem tatsächlichen Parkablauf hat den Vorteil, dass sich der Fahrzeuglenker auf die durchzuführenden Bewegungen einstellen kann. Ein Anweisen des Fahrzeuglenkers während des Parkvorgangs führt zur Realisierung des vorteilhaften Parkablaufs.

Um den Fahrzeuglenker beim Parken weiter zu entlasten und den Parkablauf dadurch sicherer zu gestalten, kann erfindungsgemäß vorgesehen sein, dass das Fahrzeug während des Parkablaufs automatisch abgebremst oder automatisch beschleunigt wird. Insbesondere in Verbindung mit einem Automatikgetriebe kann vorteilhafterweise vorgesehen werden, dass der Fahrzeuglenker vollständig auf ein Beschleunigen verzichten kann, da durch die Automatik das Fahrzeug auch ohne ein Betätigen des Gaspedals vorwärts getrieben wird. Der Fahrzeuglenker hat dann lediglich den Anweisungen Folge zu leisten, die das Drehen des Lenkrades betreffen.

Ferner kann erfindungsgemäß vorgesehen werden, dass das Fahrzeug während des Parkablaufes zusätzlich automatisch gesteuert wird. Dadurch wird erreicht, dass der Fahrzeuglenker weder das Fahrzeug abbremsen noch das Lenkrad betätigen muss. Ein ideales Einparken kann folglich gewährleistet werden, wobei der Fahrzeuglenker aufgrund der visuellen Darstellung des Einparkvorganges den Parkablauf in optimaler Art und Weise überwachen kann.

Ein vorteilhaftes Verfahren ergibt sich dann, wenn Schritt b) zeitgleich zu Schritt c) erfolgt und wenn Schritt b) abhängig vom bereits erfolgten Parkablauf bzw. von der jeweils momentanen Fahrzeugposition neue denkbare Parkabläufe bestimmt. Aufgrund des jeweils momentanen Lenkradeinschlages wird erfindungsgemäß bestimmt, wie eine zukünftige Lenkwinkeländerung ausfallen muss, um ein ideales Parken des Fahrzeuges zu erreichen. Vorteilhafterweise werden zur Bestimmung des Parkablaufes die räumlichen Abmessungen des Fahrzeugs, Abstände zu den die Parklücke umgebenden Objekten, Lenkradeinschlag, Geschwindigkeit und/oder die jeweils momentane Fahrzeugposition sowie gegebenenfalls weitere, insbesondere fahrzeugspezifische Größen berücksichtigt. Zur Bestimmung des bereits erfolgten Parkablaufs werden insbesondere die gefahrene Geschwindigkeit und/oder der zurückgelegte Weg und/oder die erfolgten Lenkradbewegungen berücksichtigt.

Die eingangs genannte Aufgabe wird außerdem durch ein Computerprogramm gelöst, das zur Durchführung des erfindungsgemäßen Verfahrens geeignet ist, wenn es auf einem Steuer- und/oder Regelgerät ausgeführt wird. Das Computerprogramm ist vorteilhafterweise abgespeichert, insbesondere auf einem Flash-Memory.

Ferner wird die eingangs genannte Aufgabe gelöst durch ein Steuer- und/oder Regelgerät zum Betreiben eines Parkhilfesystems, das zum Steuern und/oder Regeln des erfindungsgemäßen Verfahrens geeignet ist.

Letztlich wird die der Erfindung zugrundeliegende Aufgabe gelöst durch ein Parkhilfesystem für ein Fahrzeug umfassend wenigstens einen Abstandsmesssensor, einen Wegmesssensor bzw. einen Geschwindigkeitsmesssensor, einen Lenkwinkelmesssensor, ein mit den Sensoren verbundenes Steuer- und/oder Regelgerät zur Datenauswertung und zur Steuerung und/oder Regelung eines Anzeigegeräts, das zum Darstellen eines vorteilhaften Einund/oder Ausparkablaufs vorgesehen ist, wobei das Parkhilfesystem zur Durchführung des erfindungsgemäßen Verfahrens geeignet ist.

Ein vorteilhaftes Parkhilfesystem ergibt sich dann, wenn das Steuer- und/oder Regelgerät auch zur Steuerung und/oder Regelung eines Brems- und/oder Beschleunigungssystems geeignet ist. Je nach relativer Position des Fahrzeuges zu den die Parklücke begrenzenden Objekten kann das Brems- und/oder Beschleunigungssystem von dem Steuer- und/oder Regelgerät derart angesteuert werden, dass ein vorteilhaftes Einparken möglich wird.

Erfindungsgemäß kann außerdem ein Wiedergabegerät vorgesehen sein, das zur Wiedergabe von insbesondere akustischen, optischen oder taktilen Anweisungen an den Fahrzeuglenker geeignet ist. Neben der visuellen Darstellung des Einparkablaufes kann der Fahrzeuglenker beispielsweise durch akustische und optische Anweisungen dazu angewiesen werden, das Fahrzeug in die entsprechende Richtung zu setzen und/oder das Lenkrad in die entsprechende Richtung um einen entsprechenden Winkel einzuschlagen.

Vorteilhafterweise ist das Anzeigegerät und/oder das Wiedergabegerät ein Bildschirm, ein Display, eine Mattscheibe od.dgl.. Moderne Fahrzeuge sehen derartige Anzeigegeräte für andere Fahrzeugsysteme vor. Das Anzeigegerät und/oder das Wiedergabegerät kann vorteilhafterweise Bestandteil eines Bordsystems, insbesondere Navigations-, Infotainment-, Bordcomputersystems od.dgl. sein.

Ein derartiges Parkhilfesystem hat den Vorteil, dass sämtliche Hardwarekomponenten im Fahrzeug von anderen Bordsystemen bereits vorhanden sein können. Durch Vorsehen eines erfindungsgemäßen Computerprogramms können die Hardwarekomponenten derart miteinander zusammenwirken, dass sich ein erfindungsgemäßes Parkhilfesystem ergibt.

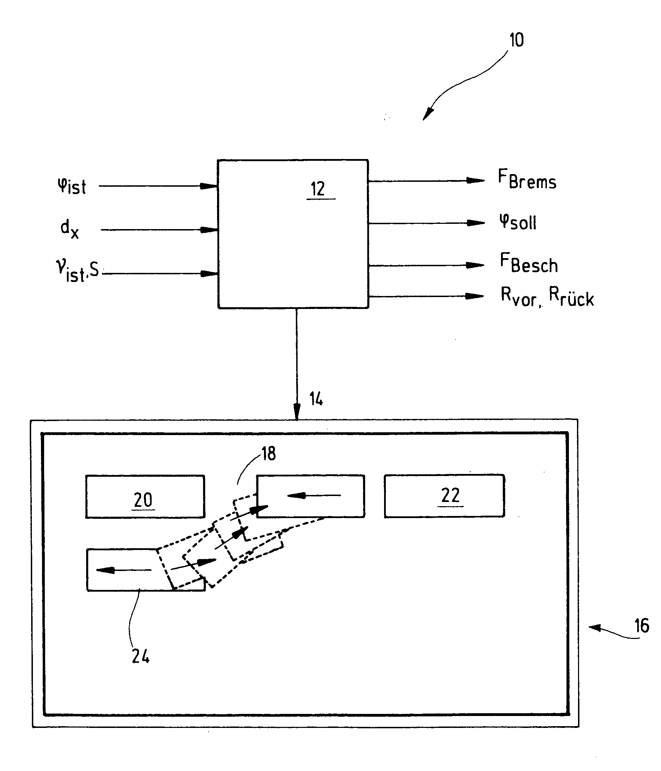

Weitere vorteilhafte Ausgestaltungen und Eigenschaften der Erfindung sind der folgenden Beschreibung zu entnehmen, in der die Erfindung anhand des in der Zeichnung dargestellten Ausführungsbeispiels näher beschrieben und erläutert ist.

In der Figur ist ein erfindungsgemäßes Parkhilfesystem 10 schematisch dargestellt. Das Parkhilfesystem umfasst ein zentrales Steuergerät 12, das verschiedene Eingangs- und Ausgangsgrößen aufweist. Eingangsgrößen des Steuergeräts 12 sind beispielsweise der tatsächliche Lenkwinkel *ϕ*_{*ist*}, verschiedene Abstände *d*_{*x*} des Fahrzeugs zu die Parklücke begrenzenden Objekten und die Geschwindigkeit des Fahrzeuges *v*_{*ist*} bzw. der vom Fahrzeug zurückgelegte Weg *s*. Der Lenkwinkel *ϕ*_{*ist*} wird dem Steuergerät über einen Lenkwinkelsensor mitgeteilt. Die verschiedenen Abstände *d*_{*x*} werden von an dem Fahrzeug vorgesehenen Abstandssensoren bzw. von einem Umfeldkennungssystems an das Steuergerät 12 übermittelt. Die Geschwindigkeit *V*_{*ist*} bzw. der zurückgelegte Weg *S* des Fahrzeuges wird mittels eines Geschwindigkeitssensors bzw. mittels eines Wegmesssensors erfasst.

Ausgangsgrößen des Steuergeräts 12 sind beispielsweise eine zur Bremskraft proportionale Größe *F*_{*Brems*}, die zur Ansteuerung eines Bremssystems vorgesehen ist und der zur Erzielung eines optimalen Parkvorganges erforderliche Lenkwinkel *ϕ*_{*soll*}. Eine weitere Ausgangsgangsgröße des Steuergeräts ist die Richtung, in welche der Fahrzeuglenker das Fahrzeug zu setzen hat, nämlich *R*_{*vor*} für vorwärts und *R*_{*rück*} für rückwärts. Ferner kann eine Ausgangsgröße ein Wert *F*_{*Besch*} sein, der zur Ansteuerung eines Beschleunigungssystems dient, um eine denkbare Beschleunigung des Fahrzeugs zu erreichen.

Weitere, nicht dargestellte Eingangsgrößen des Steuergeräts sowie weitere, ebenfalls nicht dargestellte Ausgangsgrößen des Steuergeräts 12 sind denkbar.

Eine Ausgangsgröße 14 des Steuergeräts 12 steuert ein Anzeigegerät 16 in Form eines Displays. Das für den Fahrzeuglenker sichtbare Display 16 zeigt beispielhaft zwei parkende, eine Parklücke 18 begrenzende Objekte in Form von Fahrzeugen 20 und 22 in der Ansicht von oben bzw. in der Vogelperspektive. Ferner ist ein Fahrzeug 24 dargestellt, das das Fahrzeug sein soll, in dem der Fahrzeuglenker sitzt.

Beim Vorbeifahren des Fahrzeugs 24 an der Parklücke 18 wird die Länge und/oder Breite der Parklücke 18 bestimmt. Dazu können an dem Fahrzeug 24 Abstandsmesssensoren bzw. ein Fahrzeugumfelderfassungssystem vorgesehen sein. In einem nächsten Schritt wird ausgehend von der Position des Fahrzeugs 24 relativ zur Parklücke 18 denkbare Einparkabläufe für das Fahrzeug in die Parklücke bestimmt. Bevor das Fahrzeug 24 in die Parklücke 18 setzt, kann dem Fahrzeuglenker vorteilhafterweise über das Display 16 angezeigt werden, wie ein besonders vorteilhafter Einparkablauf aussehen kann. Die Darstellung ist vorteilhafterweise eine bewegte, dynamische Darstellung, die in der Figur gestrichelt angedeutet ist. Der Fahrzeuglenker erhält dadurch eine Vorstellung, wie der Parkablauf aussieht, um ein optimales Einparken zu erreichen.

In einem nächsten Schritt wird der Fahrzeuglenker angewiesen, in welche Richtung *R*_{*vor,*} *R*_{*rück*} das Fahrzeug zu bewegen ist und in welche Richtung bzw. wie weit das Lenkrad *ϕ*_{*soll*} einzuschlagen ist. Die Ausgangsgrößen *ϕ*_{*soll*} und *R*_{*vor,*} *R*_{*rück*} werden dazu dem Fahrzeuglenker über ein nicht dargestelltes Wiedergabegerät mitgeteilt. Die Wiedergabe kann insbesondere akustisch, optisch oder taktil erfolgen. Eine optische Wiedergabe kann beispielsweise auch, neben der Darstellung des Parkablaufs, über das Anzeigegerät 16 erfolgen.

Während des Einparkablaufes wird aufgrund des jeweils momentanen Lenkradeinschlages *ϕ*_{*ist*} und der zugehörigen Fahrzeuggeschwindigkeit *V*_{*ist*} bestimmt, wie eine zukünftige Lenkwinkeländerung *ϕ*_{*soll*} ausfallen muss, um ein ideales Parken des Fahrzeuges zu erreichen. Der Wert *ϕ*_{*soll*} wird dem Fahrzeuglenker mitgeteilt.

Gemäß der Darstellung auf dem Display 16 beginnt der eigentliche Einparkablauf mit Rückwärtssetzen des Fahrzeuges 24. Zeitgleich zur tatsächlichen Bewegung des Fahrzeuges 24 wird die tatsächliche Position des Fahrzeugs 24 gegenüber der Parklücke 18 bzw. den parkenden Objekten 20 und 22 dargestellt. Der Fahrzeuglenker behält somit jederzeit die Übersicht, in welcher Position das Fahrzeug sich befindet. Hierzu muss der Fahrzeuglenker lediglich das Anzeigegerät 16 betrachten. Ein Umschauen oder Umdrehen des Fahrzeuglenkers ist nicht erforderlich.

Vorteilhafterweise muss der Fahrzeuglenker während des Einparkvorganges lediglich die Bremse betätigen, da bei einem Automatikgetriebe ohne Betätigen des Gaspedals das Fahrzeug 24 vorantreibt. Um ein Auffahren auf ein die Parklücke 18 begrenzendes Objekt 20, 22 zu verhindern, kann bei zu hoher Geschwindigkeit während des Einparkvorganges bzw. bei zu nahem Anfahren an ein stehendes Fahrzeug 20, 22 das Steuergerät 12 das einparkende Fahrzeug 24 über die Ausgangsgröße *F*_{*Brems*} abbremsen bzw. stoppen.

Die Erfindung hat den Vorteil, dass sämtliche Komponenten des Parkhilfesystems bereits bei modernen Fahrzeugen vorhanden sind. Aufgrund eines geeigneten Computerprogramms, das auf dem Steuergerät 12 ausgeführt wird, ergibt sich das erfindungsgemäße Verfahren, das den Einparkvorgang anschaulich darstellt und insgesamt wesentlich vereinfacht.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahren zum Betreiben eines Ein- und/oder Ausparkhilfesystems (10) für ein Fahrzeug (24), **gekennzeichnet durch** folgende Schritte:
a) Bestimmen der Länge und/oder Breite einer Parklücke (18),
b) Bestimmen von wenigstens einem denkbaren Ein- und/oder Ausparkablauf für das Fahrzeug (24) in die Parklücke (18) bzw. aus der Parklücke (18), und
c) Darstellen eines vorteilhaften Ein- und/oder Ausparkablaufs derart, dass der Fahrzeuglenker den Parkablauf auf einem Anzeigegerät (16) visuell verfolgen kann.

2. Verfahren nach Anspruch 1, **dadurch gekennzeichnet, dass** das Fahrzeug (24) und die das Fahrzeug umgebenden Objekte (20, 22) schematisch bildlich dargestellt werden.

3. Verfahren nach Anspruch 1 oder 2, **dadurch gekennzeichnet, dass** der Fahrzeuglenker den Parkablauf zeitgleich zur tatsächlichen Bewegung des Fahrzeuges (24) und/oder als Vorschau, insbesondere bei stehendem Fahrzeug (24), verfolgen kann.

4. Verfahren nach Anspruch 1, 2 oder 3, **dadurch gekennzeichnet, dass** die Darstellung eine Ansicht aus der Vogelperspektive ist.

5. Verfahren nach einem der vorhergehenden Ansprüche, **dadurch gekennzeichnet, dass** die Darstellung als bewegte, dynamische Darstellung erfolgt.

6. Verfahren nach einem der vorhergehenden Ansprüche, **dadurch gekennzeichnet, dass** der Fahrzeuglenker vor und/oder während des Parkablaufs angewiesen wird, in welche Richtung (*R*_{*vor*}, *R*_{*rück*})das Fahrzeug (24) zu bewegen ist und in welche Richtung bzw. wie weit (ϕ_{*soll*}) das Lenkrad einzuschlagen ist.

7. Verfahren nach einem der vorhergehenden Ansprüche, **dadurch gekennzeichnet, dass** das Fahrzeug (24) während des Parkablaufes automatisch abgebremst oder automatisch beschleunigt wird.

8. Verfahren nach einem der vorhergehenden Ansprüche, **dadurch gekennzeichnet, dass** das Fahrzeug (24) während des Parkablaufes automatisch gesteuert wird.

9. Verfahren nach einem der vorhergehenden Ansprüche, **dadurch gekennzeichnet, dass** Schritt b) zeitgleich zu Schritt c) erfolgt und dass Schritt b) abhängig vom bereits erfolgten Parkablauf bzw. von der jeweils momentanen Fahrzeugposition neue denkbare Parkabläufe bestimmt.

10. Verfahren nach einem der vorhergehenden Ansprüche, **dadurch gekennzeichnet, dass** zur Bestimmung des Parkablaufes die räumlichen Abmessungen des Fahrzeugs (24), Abstände zu die Parklücke (*d*_{*x*}) umgebenden Objekten (20, 22), Lenkradeinschlag (*ϕ*_{*ist*}), Geschwindigkeit (*V*_{*ist*}) und/oder die jeweils momentane Fahrzeugposition sowie gegebenenfalls weitere, insbesondere fahrzeugspezifische Größen berücksichtigt werden.

11. Verfahren nach einem der vorhergehenden Ansprüche, **dadurch gekennzeichnet, dass** zur Bestimmung des bereits erfolgten Parkablaufes die gefahrene Geschwindigkeit (*V*_{*ist*}) und/oder der zurückgelegte Weg (*S*) und/oder die erfolgten Lenkradbewegungen (*ϕ*_{*ist*}) berücksichtigt werden.

12. Computerprogramm, **dadurch gekennzeichnet, dass** es zur Durchführung des Verfahrens nach einem der vorhergehenden Ansprüche geeignet ist, wenn es auf einem Steuerund/oder Regelgerät (12) ausgeführt wird.

13. Computerprogramm nach Anspruch 12, **dadurch gekennzeichnet, dass** es auf einem Speicher, insbesondere auf einem Flash-Memory, abgespeichert ist.

14. Steuer- und/oder Regelgerät (12) zum Betreiben eines Parkhilfesystems (10), **dadurch gekennzeichnet, dass** es zum Steuern und/oder Regeln eines Verfahrens nach einem der Ansprüche 1 bis 11 geeignet ist.

15. Parkhilfesystem (10) für ein Fahrzeug (24) umfassend wenigstens einen Abstandsmesssensor, einen Wegmesssensor bzw. einen Geschwindigkeitsmesssensor, einen Lenkwinkelmesssensor, ein mit den Sensoren verbundenes Steuer- und/oder Regelgerät (12) zur Datenauswertung und zur Steuerung und/oder Regelung eines Anzeigegeräts (16), das zum Darstellen eines vorteilhaften Ein- und/oder Ausparkablaufs vorgesehen ist, wobei das Parkhilfesystem zur Durchführung des Verfahrens nach einem der Ansprüche 1 bis 11 geeignet ist.

16. Parkhilfesystem (10) nach Anspruch 12, **dadurch gekennzeichnet, dass** das Steuer- und/oder Regelgerät (12) zur Steuerung und/oder Regelung eines Brems- und/oder Beschleunigungssystems geeignet ist.

17. Parkhilfesystem (10) nach Anspruch 12 oder 13, **dadurch gekennzeichnet, dass** ein Wiedergabegerät vorgesehen ist, dass zur Wiedergabe von insbesondere akustischen, optischen oder taktilen Anweisungen an den Fahrzeuglenker geeignet ist.

18. Parkhilfesystem (10) nach Anspruch 12, 13 oder 14, **dadurch gekennzeichnet, dass** das Anzeigegerät (16) und/oder das Wiedergabegerät ein Bildschirm, ein Display, eine Mattscheibe od.dgl. ist.

19. Parkhilfesystem (10) nach Anspruch 12 bis 15, **dadurch gekennzeichnet, dass** das Anzeigegerät (16) und/oder das Wiedergabegerät Bestandteil eines Bordsystems, insbesondere eines Navigations-, Infotainment-, Bordcomputersystems, od.dgl. ist.
